# EUROPEAN PATENT SPECIFICATION

(11) **EP 3 569 543 B1**
(45) Date of publication and mention of the grant of the patent: **20.04.2022**
(21) Application number: 19162676.1
(22) Date of filing: 13.03.2019
(51) Int. Cl.: B66B 1/40, B66B 1/34

(54) **METHOD FOR CONTROLLING MOTOR IN ELEVATOR SYSTEM**
VERFAHREN ZUR STEUERUNG EINES MOTORS IN EINER AUFZUGSANLAGE
PROCÉDÉ DE COMMANDE DE MOTEUR DANS UN SYSTÈME D'ASCENSEUR

(30) Priority: 14.05.2018 KR 20180054633
(43) Date of publication of application: 20.11.2019
(73) Proprietor: LSIS Co., Ltd., Gyeonggi-do 14119 (KR)
(72) Inventor: SON, Ju-Beom, 14118 Gyeonggi-do (KR)
(74) Representative: K&L Gates LLP

(56) References cited:
- EP-A2- 0 792 833
- WO-A1-2010/134158
- KR-A- 20140 056 081

## Description

### TECHNICAL FIELD

The present invention relates to a method for controlling a motor in an elevator system.

### BACKGROUND

Generally, an inverter is an inverse conversion device that electrically converts DC to AC. An inverter used in the industry is defined as a series of devices that control a motor speed such that the motor is used with a high efficiency by receiving a power supplied from a commercial power supply and varying a voltage and frequency of the power by itself and supplying the varied power to the motor. The inverter is controlled via a variable voltage variable frequency (VVVF) scheme. The inverter may vary a voltage and frequency input to the motor based on a pulse width modulation (PWM) output.

Usually, the inverter being driven by a V/f control mode may mean that the inverter may control a frequency according to a magnitude of a voltage. In this connection, a speed sensor (encoder) for measuring a rotational speed of the motor is not used for the V/f control. Therefore, when the elevator system is operated in the V/f control mode, an accurate travel distance of an elevator car cannot be calculated.

Nevertheless, a price of the speed sensor such as the encoder is high, and, thus, in a low-cost elevator system, the elevator car is operated with estimating the rotation speed of the motor without the speed sensor. Accordingly, the conventional elevator system has a problem that the stability of the system is low due to the limitation that the travel distance of the elevator car cannot be accurately calculated.

EP0792833A2 discloses a method of adjusting a leveling time of an elevator car. The document further discloses an elevator system, wherein a magnetic emitter is attached to the hoistway and two vertical spaced sensors are attached on the side of a car. By time measurements in response of the first signal and second signal of the sensors caused by the emitter in response of moving the elevator car in the hoistway, the speed and location of the car is determined.

KR20140056081A discloses a magnetic switch device including a magnetic sensor that is capable of improving detection accuracy.

### SUMMARY

In order to solve the problem, a purpose of the present invention is to provide a method for controlling a motor in an elevator system adopting the voltage/frequency (V/f) control scheme which does not use the speed sensor, in which an accuracy of a vertical level position error of the elevator car in the elevator car landing is improved to increase performance of the elevator system.

According to the present invention, there is provided a method for controlling a motor in an elevator system, wherein in the elevator system, a level sensor is disposed at a fixed position on each floor of a building, and a first magnetic signal emitter and a second magnetic signal emitter are coupled to a car and are vertically arranged to be spaced from each other above the car, and the motor operates to move the car upward or downward, wherein the method comprises: when the level sensor receives a magnetic signal from the first magnetic signal emitter, outputting, to the motor, an output voltage corresponding to a command frequency at a deceleration level; measuring a first time duration from a first time-point at which the level sensor receives the magnetic signal of the first magnetic signal emitter to a second time-point at which the level sensor receives a magnetic signal from the second magnetic signal emitter; calculating an actual speed of the motor using the first time duration; determining a second time duration from the second time-point to a third time-point at which the car stops, using the actual speed and a predetermined travel distance; and adjusting an leveling error using the second time duration.

In one implementation, the actual speed of the motor is calculated by dividing a distance between the first and second magnetic signal emitters by the first time duration.

In one implementation, adjusting the leveling error includes moving the car 3 during the second time duration to allow arrive at a target floor level.

In one implementation, each of the first and second magnetic signal emitters includes an inductor.

In the method for controlling the motor according to an embodiment of the present invention, the determination between the regenerative load situation and the motoring load situation and the calculation of the load amount are not separately required. Rather, measuring the time duration of each temporal section may allow the leveling error to be reduced. Thus, the ride comfort on the elevator car may be improved as compared with the conventional approach. This may improve the performance of the elevator system.

Further specific effects of the present disclosure as well as the effects as described above will be described in conduction with illustrations of specific details for carrying out the invention.

### BRIEF DESCRIPTION OF THE DRAWINGS

FIG. 1 shows a configuration of a typical elevator system.
FIG. 2 shows a change in a motor speed over time according to a target speed (command frequency) of an inverter when the elevator system in FIG. 1 sets a target floor and a car starts to move down or up.
FIG. 3 shows an example of a floor top level matching device in an elevator system.
FIG. 4 shows a relationship between a command frequency and an actual motor speed in a leveling region.
FIG. 5 is a flow chart for illustrating a method for controlling a motor in accordance with one embodiment of the present invention.
FIG. 6 is an example of an approach to reduce an leveling error in a motoring load.
FIG. 7 is an example of an approach to reduce an leveling error in an regenerative load.

### DETAILED DESCRIPTION

Hereinafter, a method for controlling a motor in an elevator system in accordance with the present invention will be described with reference to the accompanying drawings.

For simplicity and clarity of illustration, elements in the figures, are not necessarily drawn to scale. The same reference numbers in different figures, denote the same or similar elements, and as such perform similar functionality. Further, descriptions and details of well-known steps and elements are omitted for simplicity of the description. Furthermore, in the following detailed description of the present invention, numerous specific details are set forth in order to provide a thorough understanding of the present disclosure. However, it will be understood that the present invention may be practiced without these specific details. In other instances, well-known methods, procedures, components, and circuits have not been described in detail so as not to unnecessarily obscure aspects of the present invention.

The above objects, features and advantages will become apparent from the detailed description with reference to the accompanying drawings.

Unless defined otherwise, all terms used herein have the same meaning as commonly understood by one of ordinary skill in the art. When the terms used herein are in conflict with a general meaning of the term, the meaning of the term is in accordance with a definition used herein.

Examples of various embodiments are illustrated and described further below. It will be understood that the description herein is not intended to limit the claims to the specific embodiments described. On the contrary, the invention is defined by the appended claims.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the appended claims.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

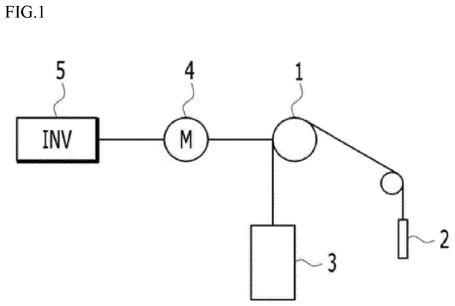

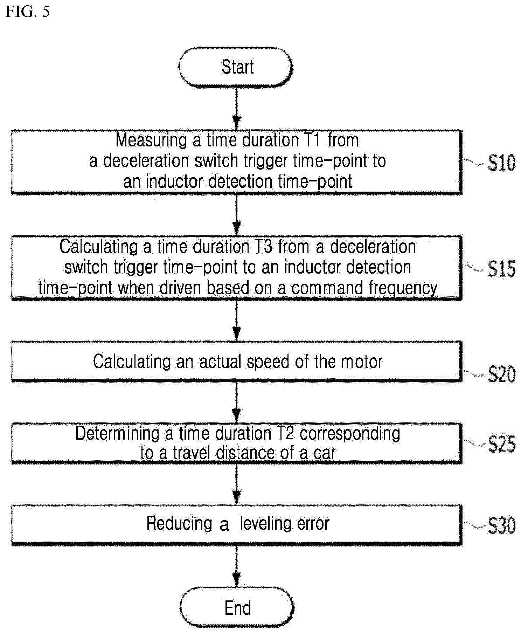

Hereinafter, a leveling operation in a conventional elevator system will be described with reference to FIGS. 1 to 4. A method for controlling a motor in the elevator system according to an embodiment of the present invention will be described with reference to FIGS. 5 to 7.

FIG. 1 shows a configuration of a typical elevator system.

As shown in FIG. 1, a typical elevator system includes a hoist 1, a balance weight 2 and a car 3. An inverter 5 supplies a power to a motor 4. The hoist 1 is driven forward or backward by the motor 4 to move the car 3 up or down. A person or cargo is boarded on the car 3. The balance weight 2 is positioned opposite the car 3 with the hoist 1 interposed therebetween.

When the car 3 is moving between floors, the car 3 should be landed such that a top level of the car 3 exactly matches a top level of a target floor. When a leveling error occurs and thus the car 3 has been landed such that a top level of the car 3 mismatches a top level of a target floor, a lot of inconvenience may occur when people get on and off the car 3. Even injuries may occur.

Thus, a technique for reducing the leveling error is one of the most important techniques for the elevator system and is directly related to performance of the elevator system.

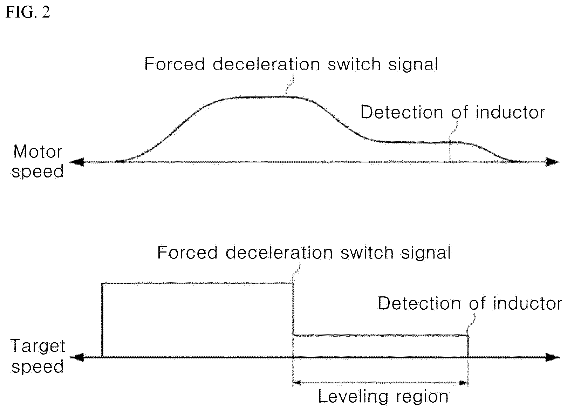

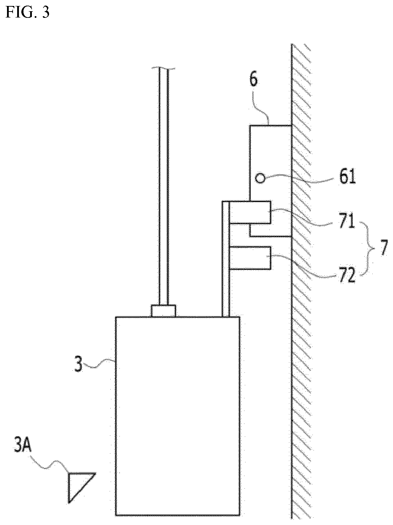

FIG. 2 shows a change in a motor speed over time according to a target speed (command frequency) of an inverter when the elevator system in FIG. 1 sets a target floor and a car starts to move down or up. FIG. 3 shows an example of a floor top level matching device in an elevator system.

As shown in FIG. 2, when a drive command is received from a higher level controller (not shown), the motor 4 is accelerated via an initial start. Then, a speed of the motor 4 reaches a first target speed and enters a constant-speed drive mode (constant-speed region). During the constant-speed drive mode of the motor, a speed-reducing command (deceleration switch signal) is executed via detection of a magnetic signal of an upper inductor 71. Thus, the motor 4 enters a leveling region after the deceleration. That is, the motor 4 enters a constant-speed drive at a second target speed (called a leveling speed) lower than the first target speed.

Referring to FIG. 3, when, after the second constant-speed drive in the leveling region, a level sensor 61 located on a shielding plate 6 senses a magnetic signal of a lower inductor 72, the inverter 5 receives a stop command and the motor 4 decelerates and stops. The deceleration and stop means that the car 4 reaches the target floor. In this connection, a top-level matching error may depend on a travel distance of the car 3. The most important factor in the leveling region is a travel distance of the car 3 after receiving the stop command.

In an elevator system employing the V/f control mode in which a calculation of the travel distance of the car 3 is difficult, a target speed of the inverter 5 is adjusted so that a level of the inductor 7 matches a top level of the target floor. This may be referred to as "level-matching operation". When the travel distance of the car 3 after the deceleration and stop command is constant regardless of an external condition, the leveling error hardly occurs. However, when the motor 4 used in the elevator system is of an induction motor type, a slip may occur.

A rotator of the induction motor rotates via a rotating magnetic field generated by a stator. In this connection, when the rotator rotates at the same speed as a rotation speed of the rotating magnetic field, the magnetic flux is not linked and thus an electromotive force is not generated, and thus a torque is not generated in the rotator. In other words, in order to generate torque, the rotator must rotate at a lower speed than a rotation speed of the rotating magnetic field from the stator. The slip may be used to indicate a degree by which the rotational speed of the rotator is lower than the rotation speed of the rotating magnetic field from the stator.

Since the slip may vary depending on a load, a leveling error occurs. Eventually, the leveling error occurs depending on the number of people on the car 3, a moving direction of the car 3, a load type, that is, a motoring load or a regenerative load, or an amount of the load. In a motoring mode, a torque is applied such that a direction of the load is opposite to the rotation direction of the motor 4. In a regenerative mode, a torque is applied such that a direction of the load is identical with the rotation direction of the motor 4.

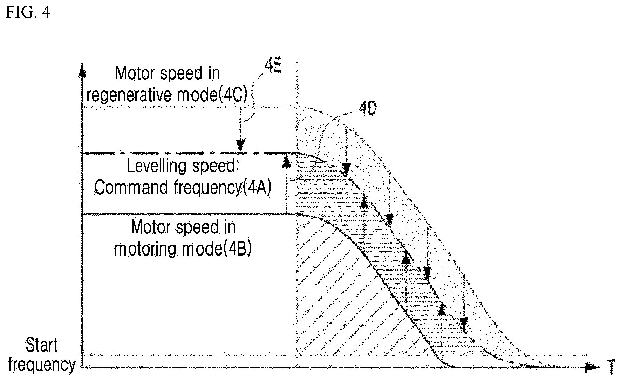

A reason for the leveling error occurrence may be identified with reference to FIG. 4. FIG. 4 shows a relationship between the command frequency and an actual motor speed in the leveling region.

A speed 4B of the motor 4 in the motoring mode and a speed 4C of the motor 4 in the regenerative mode differ from a leveling speed 4A as the command frequency by arrows 4D and 4E respectively. The sizes of the arrows 4D and 4E may depend on the amount of the load. That is, a difference between the command frequency and the actual motor speed may vary depending on the load amount. This phenomenon may be caused by the slip in the induction motor. The larger the load amount, the greater the slip size.

Due to this difference, the landing level may slightly vary. To overcome this problem, slip compensation was made. However, when a slip compensation algorithm is used, an amount of calculation until a correct compensation amount is obtained increases. Further, since it is difficult to distinguish between the regenerative mode and the monitoring mode, it is difficult to accurately calculate the compensation amount.

Even when the correct compensation amount is calculated, a shock may occur in the landing phase, which adversely affects the ride comfort of the person on the car 3. This is because a voltage corresponding to the slip compensation amount is additionally applied to the motor 4, and, thus, the shock may occur due to an additional compensation amount corresponding to the slip compensation amount at the landing phase. As a result, the performance of the elevator system is not greatly improved.

The most important section in the leveling region is a section after the stop command reception. This section is indicated by a shaded region in FIG. 4. This section is important because the travel distance of the elevator car 3 until the elevator car 3 has landed after the level sensor 6 detects the inductor 7 is closely associated with a floor top-level matching error. Hereinafter, a method for controlling a motor in accordance with an embodiment of the present invention will be described with reference to the drawings.

FIG. 5 is a flow chart for illustrating a method for controlling the motor in accordance with one embodiment of the present invention. In this control method, in the elevator system of FIG. 1, the inverter 5 controls the motor 4. The inverter 5 in accordance with an embodiment of the present invention receives a commercial power and converts the power into a power having a command frequency and a command voltage, and supplies the command frequency and command voltage to the motor 4 so as to control the motor 4.

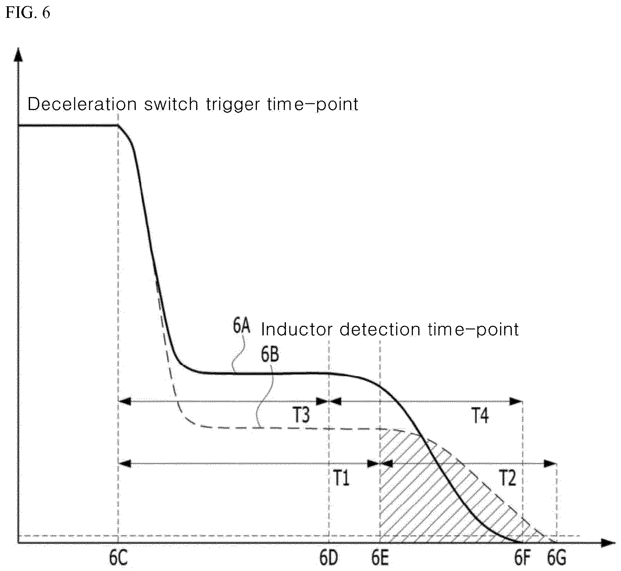

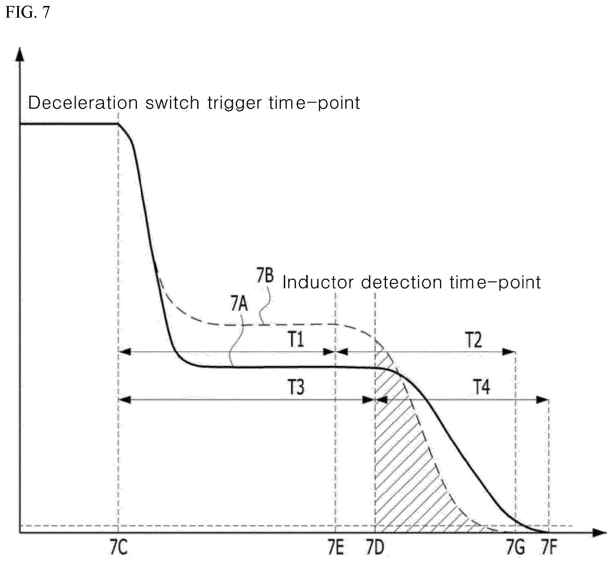

FIG. 6 is an example of an approach to reduce an leveling error in a motoring load. FIG. 7 is an example of an approach to reduce an leveling error in an regenerative load. For each of the motoring load and regenerative load, a difference between the command frequency (target speed) and the actual motor speed may be checked.

In FIG. 6, in the motoring load situation, in a section of the leveling region after a deceleration switch signal is triggered via detection of the magnetic signal of the upper inductor 71 (or the lower inductor 72), and in which the magnetic signal of the lower inductor 72 (or upper inductor 71) is sensed, 6A represents the command frequency, and 6B represents the actual motor 4 speed.

A time-point 6D at which the magnetic signal of the lower inductor 72 (or the upper inductor 71) is sensed when driven at the command frequency may not coincide with a time-point 6E at which the magnetic signal of the lower inductor 72 (or the upper inductor 71) is sensed when driven at the actual motor 4 speed. This causes a non-coincidence between a stop time-point 6F when driven at the command frequency and a stop time-point 6G when driven at the actual motor 4 speed.

FIG. 6 is an example of an approach to reduce an leveling error in a motoring load. FIG. 7 is an example of an approach to reduce an leveling error in an regenerative load. For each of the motoring load and regenerative load, a difference between the command frequency (target speed) and the actual motor speed may be checked.

In FIG. 7, in the regenerative load situation, in a section of the leveling region after a deceleration switch signal is triggered via detection of the magnetic signal of the upper inductor 71 (or the lower inductor 72), and in which the magnetic signal of the lower inductor 72 (or upper inductor 71) is sensed, 7A represents the command frequency, and 7B represents the actual motor 4 speed.

A time-point 7D at which the magnetic signal of the lower inductor 72 (or the upper inductor 71) is sensed when driven at the command frequency may not coincide with a time-point 7E at which the magnetic signal of the lower inductor 72 (or the upper inductor 71) is sensed when driven at the actual motor 4 speed. This causes a non-coincidence between a stop time-point 7F when driven at the command frequency and a stop time-point 7G when driven at the actual motor 4 speed.

In each of the motoring and regenerative load situations, following definitions may be set forth. When driven at the actual motor 4 speed, a section between a deceleration switch triggering time-point 6C and 7C and an inductor detection time-point 6E and 7E may be called T1; and a section between the inductor detection time-point 6E and 7E and the stop time-point 6G and 7G may be called T2. Further, when driven at the command frequency, a section between a deceleration switch triggering time-point 6C and 7C and an inductor detection time-point 6D and 7D may be called T3; and a section between the inductor detection time-point 6E and 7E and the stop time-point 6G and 7G may be called T2.

According to the conventional slip compensation algorithm, to distinguish between the motoring load condition and the regenerative load condition is required. Then, the leveling operation is performed by applying different slip compensation amounts to the motoring load condition and the regenerative load condition respectively. However, According to one embodiment of the present invention, there is no separate need to distinguish between the motoring load situation and the regenerative load situation.

The top level matching device of FIG. 3 will be described in more detail.

The inductor 7 including the upper inductor 71 and the lower inductor 72 may be coupled to the car 3 and may be placed on a top of the car 3. In this connection, the upper inductor 71 and the lower inductor 72 may be arranged to be spaced from each other vertically.

In one example, each of the upper inductor 71 and lower inductor 72 may serve as a magnetic signal emitter for emitting a magnetic signal. More specifically, the upper inductor 71 may serve as a first magnetic signal emitter. The lower inductor 72 may also function as a second magnetic signal emitter. In contrast, the upper inductor 71 may serve as a second magnetic signal emitter. The lower inductor 72 may also function as a first magnetic signal emitter.

The shielding plate 6 may be provided with the level sensor 61 for receiving an input of a magnetic sensor. For example, the level sensor 61 may be disposed at a vertical middle position of the shielding plate 6. However, the present disclosure is not limited thereto. The level sensor 61 may be disposed at various positions on the shielding plate 6.

When the upper inductor 71 reaches a position corresponding to the level sensor 61 of the shielding plate 6, the level sensor 61 may receive the magnetic signal from the upper inductor 71 and provide the signal to a controller (not shown) of the inverter 5. Upon receiving the magnetic signal of the upper inductor 71, the controller of the inverter 5 reduces a current command frequency to a deceleration level. Then, the controller may provide the motor 4 with a new command frequency having the deceleration level.

Then, when the lower inductor 72 reaches a position corresponding to the level sensor 61 of the shielding plate 6, the level sensor 61 may receive the magnetic signal from the lower inductor 72 and provide the same to the controller of the inverter 5. Upon receiving the magnetic signal of the lower inductor 72, the controller may output a stop signal to the motor 4 or may not output any signal.

However, this is an example of a case where the car 3 moves in the upward direction. It will be appreciated that when the car 3 moves downwards, a detection order of the upper and lower inductors 71 and 72 will be opposite to the above order.

In a method for controlling a motor in accordance with an embodiment of the present invention, when the car 3 moves based on the command frequency, the actual travel distance of the car 3 is already determined. Thus, an operating time of the motor 4 may be known when the motor 4 is driven based on the command frequency. Therefore, when the car 3 moves based on the actual speed of the motor 4 higher or lower than the actual command frequency, the method may determine a time duration to adjust the travel distance of the car 3.

A method for controlling the motor in accordance with one embodiment of the present invention of FIG. 5 will be exemplified.

As shown in FIG. 5, in the method for controlling the motor according to an embodiment of the present invention, when the motor 4 is driven based on an output voltage corresponding to a command frequency at a normal level and thus the car 3 moves up or down, and then when the level sensor 61 receives a magnetic signal from the upper inductor 71 (or the lower inductor 72), the inverter 5 may trigger a deceleration switch to output an output voltage corresponding to a command frequency at a deceleration level to the motor 4.

The inverter 5 then measures a time duration T1 from a deceleration switch trigger time point 6C and 7C to a time point 6E and 7E at which the level sensor 61 senses the magnetic signal from the lower inductor 72 (or upper inductor 71) S10. For this purpose, the inverter 5 may be equipped with means for time measurement.

Thereafter, when the motor 4 is driven based on an output voltage corresponding to the command frequency, the inverter 5 calculates a time duration T3 from the deceleration switch trigger time-point 6C and 7C upon detection of the magnetic signal of the upper inductor 71 (or lower inductor 72) to a detection time point 6D and 7D of the magnetic signal of the lower inductor 72 (or upper inductor 71) S15.

A distance between the upper inductor 71 (or lower inductor 72) and lower inductor 72 (or upper inductor 71) is applied equally to all of floors of a building with this elevator system. Accordingly, when the motor 4 is driven based on the output voltage corresponding to the actual command frequency, the distance between the upper inductor 71 (or lower inductor 72) and lower inductor 72 (or upper inductor 71) may be known, and, thus, the time duration T3 may be determined via calculation using the distance.

The time duration T3 may be calculated based on the command frequency, not based on the actual motor speed. For example, the time duration required for the car 3 to travel by a distance of 1 meter based on the command frequency of 50 Hz may be T3. T1 is the actual measured value. Therefore, the speed of the motor 4 may be calculated by dividing the travel distance of the car 3 by the time duration T1.

Using the measured time duration T1, the actual speed of the motor 4 in the corresponding region may be calculated S20.

Using the motor speed thus calculated, the time duration corresponding to the travel distance in a region T2 may be obtained.

That is, the travel distance of the car 3 for the time duration T2 from the time-point 6E and 7E at which the level sensor 61 senses the magnetic signal of the lower inductor 72 (or the upper inductor 71) to the time-point 6G at which the motor stops may be predetermined. That is, after the lower inductor 72 (or upper inductor 71) passes by the level sensor 61 and the car 3 stops, a position of the lower inductor 72 (or the upper inductor 71) is preset. Thus, the present method may know the travel distance and speed and thus may determine the time duration T2. In this connection, integrating the speed over the time duration as FIG. 6 and FIG. 7 results in the travel distance. In FIG. 6 and FIG. 7, an area of the shaded section may amount to the travel distance.

The time duration corresponds to the deceleration time duration of the inverter 5. Thus, the method may adjust the leveling error by adjusting the time duration S30. That is, the present method can allow the car 3 to accurately reach a top level of a target floor 3A by adjusting the time duration corresponding to the movement of the car 3 to T2.

The method for controlling a motor according to an embodiment of the present invention determines the speed in the T1 region based on the measured time duration T1. Then, the method determines the deceleration time duration T2 after the time point 6E and 7E at which the level sensor 61 senses the magnetic signal of the lower inductor 72 (or upper inductor 71), thereby allowing the car 3 to stop accurately at the target stop position.

In the method for controlling the motor according to an embodiment of the present invention, the determination between the regenerative load situation and the motoring load situation and the calculation of the load amount are not separately required. Rather, measuring the time duration of each temporal section may allow the leveling error to be reduced. Thus, the ride comfort on the elevator car may be improved as compared with the conventional approach. This may improve the performance of the elevator system.

## Claims

1. A method for controlling a motor (4) in an elevator system,
wherein, in the elevator system, a level sensor (61) is disposed at a fixed position on each floor of a building, and a first magnetic signal emitter (71) and a second magnetic signal emitter (72) are coupled to a car (3) and are vertically arranged to be spaced apart from each other above the car (3), and the motor (4) operates to move the car (3) upward or downward,
wherein the method comprises: outputting, to the motor (4), an output voltage corresponding to a command frequency at a deceleration level when the level sensor (61) receives a magnetic signal from the first magnetic signal emitter (71);
measuring (S10) a first time duration (T1) from a first time-point (6C) at which the level sensor (61) receives the magnetic signal of the first magnetic signal emitter (71) to a second time-point (6D) at which the level sensor (61) receives a magnetic signal from the second magnetic signal emitter (72);
calculating (S20) an actual speed of the motor (4) using the first time duration;
determining (S25) a second time duration (T2) from the second time-point to a third time-point (6F) at which the car (3) stops, using the actual speed and a predetermined travel distance; and adjusting (S30) a leveling error using the second time duration.

2. The method of claim 1, wherein the actual speed of the motor (4) is calculated by dividing a distance between the first and second magnetic signal emitters by the first time duration.

3. The method of claim 1, wherein the adjusting the leveling error includes moving the car (3) during the second time duration to arrive at a target floor level.

4. The method of claim 1, wherein each of the first and second magnetic signal emitters includes an inductor.

## Patentansprüche

1. Verfahren zum Steuern eines Motors (4) in einem Aufzugssystem,
wobei, in dem Aufzugssystem, ein Niveausensor (61) an einer festen Position in jedem Stockwerk eines Gebäudes angeordnet ist und ein erster Magnetsignalgeber (71) und ein zweiter Magnetsignalgeber (72) mit einer Kabine (3) gekoppelt und vertikal so angeordnet sind, dass sie über der Kabine (3) voneinander beabstandet sind, und der Motor (4) so betrieben wird, dass er die Kabine (3) nach oben oder nach unten bewegt,
wobei das Verfahren Folgendes umfasst:
Ausgeben, an den Motor (4), einer Ausgangsspannung, die einer Befehlsfrequenz bei einem Verzögerungsniveau entspricht, wenn der Niveausensor (61) ein Magnetsignal von dem ersten Magnetsignalgeber (71) empfängt;
Messen (S10) einer ersten Zeitdauer (T1) von einem ersten Zeitpunkt (6C), zu dem der Niveausensor (61) das Magnetsignal des ersten Magnetsignalgebers (71) empfängt, zu einem zweiten Zeitpunkt (6D), zu dem der Niveausensor (61) ein Magnetsignal von dem zweiten Magnetsignalgeber (72) empfängt;
Berechnen (S20) einer tatsächlichen Drehzahl des Motors (4) unter Verwendung der ersten Zeitdauer; Ermitteln (S25) einer zweiten Zeitdauer (T2) von dem zweiten Zeitpunkt zu einem dritten Zeitpunkt (6F), zu dem die Kabine (3) stoppt, unter Verwendung der tatsächlichen Drehzahl und einer vorbestimmten Wegstrecke; und
Anpassen (S30) eines Nivellierungsfehlers unter Verwendung der zweiten Zeitdauer.

2. Verfahren nach Anspruch 1, wobei die tatsächliche Drehzahl des Motors (4) durch Dividieren eines Abstands zwischen dem ersten und dem zweiten Magnetsignalgeber durch die erste Zeitdauer berechnet wird.

3. Verfahren nach Anspruch 1, wobei das Anpassen des Nivellierungsfehlers ein Bewegen der Kabine (3) während der zweiten Zeitdauer, bis sie auf ein Zielstockwerksniveau gelangt, beinhaltet.

4. Verfahren nach Anspruch 1, wobei jeder von dem ersten und dem zweiten Magnetsignalgeber einen Induktor beinhaltet.

## Revendications

1. Procédé de commande d'un moteur (4) dans un système d'ascenseur,
dans lequel, dans le système d'ascenseur, un capteur de niveau (61) est disposé à une position fixe sur chaque étage d'un bâtiment, et un premier émetteur de signal magnétique (71) et un deuxième émetteur de signal magnétique (72) sont couplés à une cabine (3) et sont agencés verticalement pour être espacés l'un de l'autre au-dessus de la cabine (3), et le moteur (4) fonctionne pour déplacer la cabine (3) vers le haut ou vers le bas, ledit procédé comprenant :
la fourniture en sortie, au moteur (4), d'une tension de sortie correspondant à une fréquence d'ordre à un niveau de décélération lorsque le capteur de niveau (61) reçoit un signal magnétique provenant du premier émetteur de signal magnétique (71) ;
la mesure (S10) d'une première durée (T1) entre un premier instant (6C) auquel le capteur de niveau (61) reçoit le signal magnétique du premier émetteur de signal magnétique (71) et un deuxième instant (6D) auquel le capteur de niveau (61) reçoit un signal magnétique provenant du deuxième émetteur de signal magnétique (72) ;
le calcul (S20) d'une vitesse réelle du moteur (4) à l'aide de la première durée ;
la détermination (S25) d'une deuxième durée (T2) entre le deuxième instant et un troisième instant (6F) auquel la cabine (3) s'arrête, à l'aide de la vitesse réelle et d'une distance de parcours prédéterminée ; et
l'ajustement (S30) d'une erreur de mise à niveau à l'aide de la deuxième durée.

2. Procédé selon la revendication 1, dans lequel la vitesse réelle du moteur (4) est calculée par division d'une distance entre les premier et deuxième émetteurs de signal magnétique par la première durée.

3. Procédé selon la revendication 1, dans lequel l'ajustement de l'erreur de mise à niveau comprend le déplacement de la cabine (3) pendant la deuxième durée afin qu'elle arrive à un niveau d'étage cible.

4. Procédé selon la revendication 1, dans lequel chacun des premier et deuxième émetteurs de signal magnétique comprend un inducteur.
